# FASCICULE DE BREVET EUROPEEN

(11) **EP 2 456 628 B1**
(45) Date de publication et mention de la délivrance du brevet: **04.03.2015**
(21) Numéro de dépôt: 10751979.5
(22) Date de dépôt: 08.07.2010
(51) Int. Cl.: B60J 10/02, B60J 10/04

(54) **PROFILÉ NOTAMMENT POUR DORMANT DE VITRE DE VÉHICULE AUTOMOBILE**
PROFIL FÜR KRAFTFAHRZEUGSFENSTERRAHMEN
PROFILE FOR THE WINDOW FRAME OF AN AUTOMOBILE VEHICLE

(30) Priorité: 20.07.2009 FR 0955022
(43) Date de publication de la demande: 30.05.2012
(73) Titulaire: Sealynx Automotive Transières, 92000 Nanterre (FR)
(72) Inventeur: VOIRIN, Michel, F-76520 Franqueville Saint Pierre (FR)
(74) Mandataire: Radault, Gabrielle
(86) Numéro de dépôt international: PCT/FR2010/051444
(87) Numéro de publication internationale: WO 2011/010043

(56) Documents cités:
- DE-U1- 20 209 718
- FR-A1- 2 858 950
- JP-A- 2007 276 686

## Description

L'invention concerne un profilé notamment pour dormant de vitre de véhicule automobile.

Un tel profilé peut être appliqué pour séparer une vitre fixe d'une vitre mobile d'un véhicule automobile.

On connaît pour ce type d'application un profilé à double feuillure comportant un rail métallique ou plastique en forme de H logeant deux profils de joint souples opposés et correspondant aux deux feuillures.

On connaît également un profilé rigide comportant un cadre rigide, à forme de H ou proche, revêtu de matière plastique ou à base de caoutchouc, convenablement cintré à la forme des portes du véhicule.

On connaît encore un profilé flexorigide comportant une armature à découpe asymétrique et se montant en une seule pièce.

Ces profilés sont simplement fixés par application de leur extrémité supérieure sur la coulisse et par un engagement de leur partie inférieure solidairement au caisson de porte.

Il existe un besoin pour un profilé ayant une plus forte résistance à l'effraction, notamment en torsion par un outil.

Le document FR 2 858 950 A décrit un profilé selon le préambule de la revendication 1.

Il est proposé un profilé possédant les caractéristiques de la revendication 1. L' engagement de la partie en saillie rend le dormant solidaire du cadre de porte, permettant ainsi une plus grande résistance à l'effraction que dans l'art antérieur.

Le niveau d'inviolabilité du profilé est ainsi renforcé.

Avantageusement et de façon non limitative, la partie en saillie peut également être apte à être engagée en prise dans une découpe complémentaire de la coulisse.

Les parties de vitre peuvent par exemple comprendre une partie de vitre fixe et une partie de vitre mobile.

Avantageusement et de façon non limitative, la partie en saillie peut être à forme biseautée ou de pyramide tronquée avec les deux ailes de l'entretoise. L'introduction, au montage, du profilé dans la coulisse et le cadre de porte est ainsi facilitée.

Avantageusement et de façon non limitative, l'extrémité comportant cette partie en saillie peut comporter des moyens d'étanchéité avec la coulisse et/ou le cadre de porte, permettant ainsi de limiter les éventuels dégâts causés par l'introduction de gouttes d'eau dans la coulisse et/ou le cadre de porte.

Avantageusement et de façon non limitative, un système anti-retour renforce l'engagement de prise et permet d'empêcher la prise de jeu entre le dormant et la coulisse.

Le système anti-retour peut par exemple comporter des dents anti-retour aptes à s'appliquer contre le bord supérieur de la découpe du cadre de porte et venir en pression contre la découpe de la coulisse. Ce système anti-retour rend difficile l'extraction du profilé du cadre de porte et/ou de la coulisse dans une tentative d'intrusion dans le véhicule.

Un avantage important, tant économique que sur la qualité perçue, est que, au montage, cette extrémité ainsi découpée permet un assemblage précis et étanche avec la coulisse et donc évite un moulage de liaison relativement onéreux.

Le plat interne peut être flexible et le plat externe peut être conformé à la forme cintrée du dormant conférant la forme cintrée à l'ensemble des plats reliés par l'entretoise.

Les plats interne et externe comportent avantageusement au moins une partie en matière plastique dure, voire très dure pour le plat externe, polypropylène ou à base d'acrylonitrile-styrène-acrylate par exemple, formant rail de guidage et de coulissement interne de la partie mobile.

Ces plats peuvent être recouverts d'une peau, améliorant ainsi leur aspect, leur toucher, résistance au vieillissement. En particulier, le plat externe peut être revêtu d'un film chromé ou coloré.

Les parties de logement peuvent comporter des lèvres souples (revêtement glissant), notamment aptes à recevoir avec étanchéité la partie mobile et/ou la partie fixe, des joints en tube, des bourrelets, des parties rigides etc.

Le profilé peut être issu d'extrusion en plusieurs matières synthétiques de caractéristiques diverses adaptées à leur fonction, par exemple une première matière synthétique pour le plat externe, une seconde matière synthétique pour l'entretoise de liaison, une troisième matière synthétique pour le plat interne, une quatrième matière synthétique pour les lèvres souples et éventuellement une cinquième matière synthétique pour les pattes d'attache, lesquelles peuvent encore être fixées mécaniquement au logement, à l'entretoise ou aux plats selon l'application.

Le plat externe peut être issu d'injection ou de moulage de matière synthétique.

L'entretoise de liaison reliant le plat interne et le plat externe peut avoir une forme élongée s'étendant sur la longueur des plats et donc facile à réaliser.

Elle est avantageusement disposée dans la partie sensiblement médiane du profilé et a une section régulière.

Elle est avantageusement formée d'une seule pièce avec le plat interne et/ou le plat externe, étant issue d'extrusion en matière plastique avec celui-ci. Le profilé est alors formé de deux parties principales, le plat externe et le plat interne qu'il suffit de relier l'un à l'autre au montage par ladite entretoise de liaison solidaire du plat interne.

Le plat externe peut être relié mécaniquement ou par tout autre moyen à l'entretoise du plat interne mais, avantageusement, il est apte à être encliqueté dans l'entretoise par au moins une patte transversale du plat externe s'engageant dans un évidement de crochetage complémentaire de l'entretoise. Ceci facilite le pré assemblage du profilé avant montage.

Le plat interne est avantageusement conformé avec un bord latéral tourné vers la partie fixe de vitre, par exemple en arrondi et s'appuyant sur elle comme une patte de fixation de la partie fixe, et son autre bord latéral pourvu d'une lèvre recevant la partie mobile de vitre. Cette disposition consolide l'application du profilé sur la partie fixe.

L'évidement de crochetage de l'entretoise peut comporter un crochet profilé convenablement orienté à l'opposé dudit bord latéral, tourné pour empêcher son désengagement relativement à ladite patte transversale du plat externe, permettant ainsi son inviolabilité au passage d'une lame par son bord opposé pourvu d'une lèvre.

L'entretoise est avantageusement conformée avec au moins une butée appliquée contre la partie fixe de vitre et formant ainsi un moyen inviolable d'antirotation relativement à la partie fixe de vitre.

L'entretoise du plat interne est avantageusement conformée avec deux ailes séparant l'évidement de crochetage au niveau médian ou proche et chacune des parties de logement opposées latéralement, ces ailes étant en outre pourvues chacune d'une lèvre recevant, l'une la partie fixe et l'autre la partie mobile de vitre et formant avec les ailes chicanes d'écoulement de l'eau pour éviter une infiltration d'eau dans l'habitacle du véhicule.

De plus, ce crochet profilé de l'entretoise ou l'entretoise peut être pourvu d'un élément d'indexage du positionnement du plat externe sur le plat interne, par exemple une saillie transversale de l'entretoise ou du crochet profilé et s'engageant dans une rainure complémentaire de la patte transversale du plat externe ou inversement, une saillie de la patte transversale s'engageant dans une rainure complémentaire de l'entretoise. Ceci facilite le pré assemblage du profilé en bonne position.

L'entretoise est conformée avec au moins un moyen de verrouillage du positionnement d'assemblage des plats, transversalement et longitudinalement.

Naturellement, un profilé en une seule pièce comportant, sur un des plats, au moins une partie en saillie apte à être engagée en prise dans une découpe complémentaire du cadre de porte peut également convenir.

De plus, le profilé peut encore comprendre plus de deux plats, notamment pour des applications à double vitrage.

En outre, le profilé peut être pourvu d'une ou plusieurs partie(s) en saillie apte à être engagée(s) en prise dans une découpe complémentaire du cadre de porte à l'une seulement de ses extrémités, ou bien aux deux extrémités.

Il est également proposé un procédé de montage d'un profilé notamment pour dormant de vitre de cadre de porte de véhicule, caractérisé en ce qu'il est monté, pré assemblé et cintré sur un cadre d'ouvrant par engagement d'au moins une partie en saillie de ce profilé dans une découpe complémentaire du cadre de porte.

Le profilé peut être fixé en au moins un point à l'intérieur du caisson de porte, par exemple au moyen d'une vis auto foreuse vissée en prise dans le plat interne.

Il résulte de cette disposition plusieurs avantages, notamment le fait que le profilé est en deux parties, se montant rapidement par encliquetage du plat externe et du plat interne et que le galbe de cintrage est réalisé directement par l'assemblage des deux plats, d'où un coût de réalisation et montage du profilé moins onéreux.

L'invention est décrite ci-après à l'aide d'un exemple de réalisation et en référence aux dessins annexés, sur lesquels :
- La figure 1 est une vue en perspective d'un exemple de profilé selon un mode de réalisation de l'invention monté sur un cadre d'ouvrant, et
- La figure 2 est une vue en coupe transversale du profilé de la figure 1 et
- La figure 3 montre la fixation de ce profilé au niveau de son extrémité supérieure.

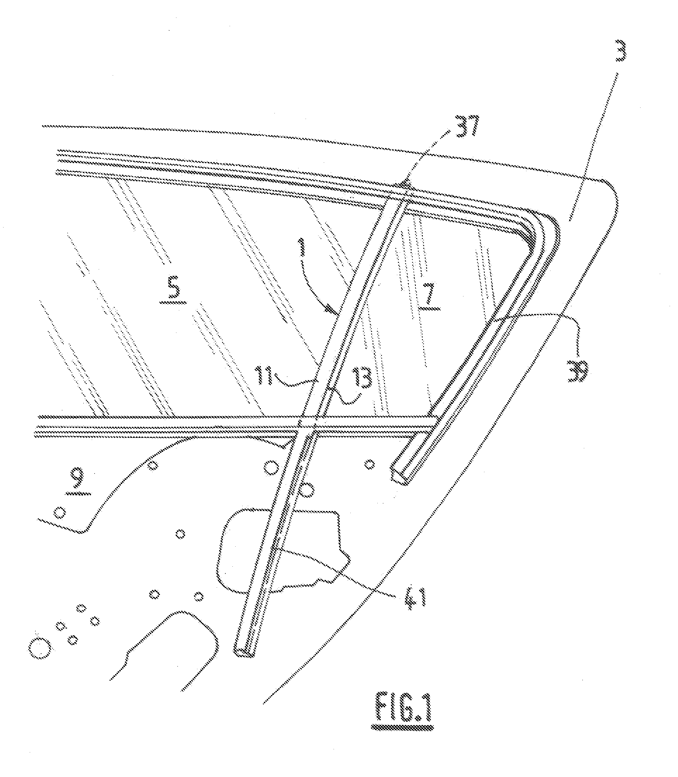

Avec référence aux dessins et en particulier à la figure 1, on a représenté un profilé 1 selon un mode de réalisation de l'invention monté sur un cadre d'ouvrant, une porte 3 de véhicule automobile. Le profilé 1 forme dormant de la vitre de porte séparant la partie de vitre mobile 5 de la partie de vitre fixe 7 de la porte. Il est prolongé en outre dans le caisson de porte comme on le voit dans la vue en arraché de la porte. Sa forme est cintrée vers l'extérieur en continuité du galbe de vitre de la porte.

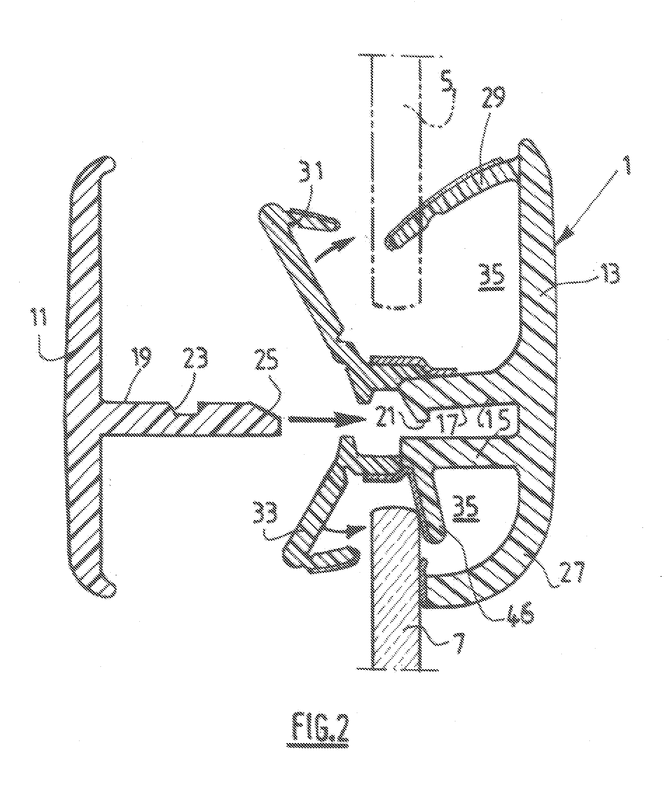

Le profilé 1 comporte deux plats profilés (figure 2), un plat externe 11 et un plat interne 13 assemblés l'un à l'autre. Le plat externe 11 est à l'extérieur du vitrage et le plat interne 13 à l'intérieur, côté habitacle du véhicule.

Le plat interne 13 reçoit en encliquetage le plat externe 11 au moyen de deux ailes profilées transversales 15, sensiblement médianes de celui ci, formant entretoise de liaison mécanique du plat externe 11 au plat interne et recevant par un évidement profilé de crochetage interne 17 (entre les deux ailes) une patte transversale profilée d'attache complémentaire 19 du plat externe 11. Ledit évidement de crochetage 17 de l'entretoise comporte un crochet profilé 21 à son extrémité coopérant avec une rainure longitudinale complémentaire 23 de la patte transversale 19 du plat externe. Cette patte transversale 19 du plat externe est effilée à son extrémité 25 pour permettre son engagement d'encliquetage (selon flèche) dans l'évidement 17 d'entretoise.

Un indexage de positionnement longitudinal des plats est en outre prévu, par exemple par un système de nervure et rainure transversale complémentaire (non représenté).

Le plat 13 comporte un bord arrondi 27 venant en contact ferme avec la partie fixe de vitre 7 et une lèvre profilée 29 tournée vers l'intérieur à son autre bord et recevant la partie mobile de vitre 5. Celle-ci reçoit une lèvre profilée 31 opposée à la précédente et solidaire de l'aile correspondante 15 proche. De même, la partie de vitre fixe 7 reçoit une lèvre profilée 33 à l'opposé du bord arrondi 27 du plat interne, cette lèvre 33 étant fixée sur l'aile correspondante 15 proche. Les lèvres 31, 33 de part et d'autre de l'entretoise forment avec les ailes 15 deux chicanes profilées opposées 35 d'écoulement de l'eau.

Le plat externe 11 est avantageusement obtenu d'injection ou moulage en matière synthétique dure (polypropylène de grande dureté par exemple) à une forme cintrée correspondant au galbe du vitrage.

Le plat interne 13 est avantageusement obtenu d'extrusion bi-composant, une matière plastique relativement dure (mais flexible) pour le plat et une matière plastique souple à base d'élastomère pour les lèvres 29, 31, 33.

Au pré assemblage du profilé avant montage sur le cadre de porte, à l'engagement d'encliquetage du plat externe 11 au plat interne 13, le plat externe 11 donne sa forme cintrée au profilé correspondant de dormant de vitrage.

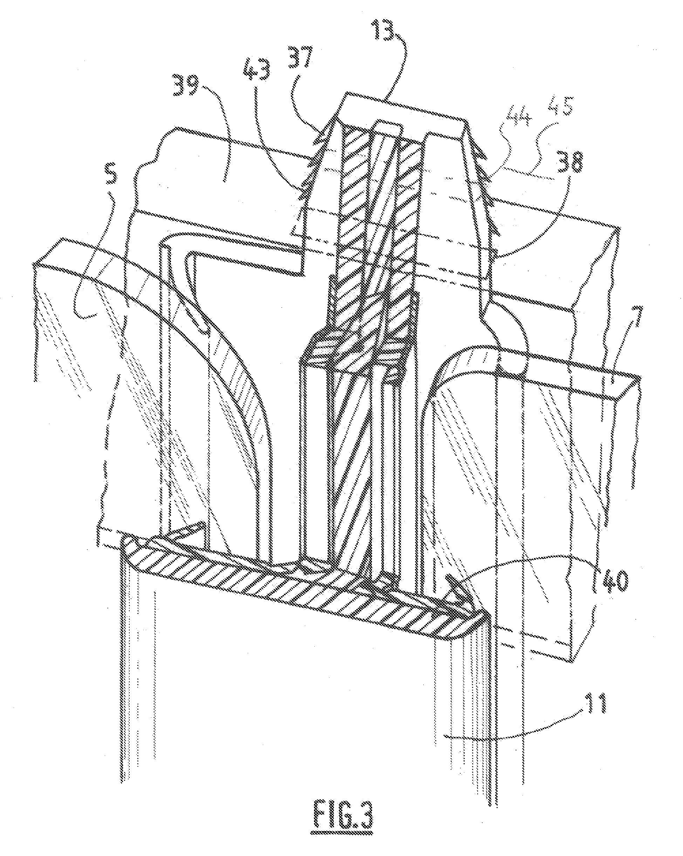

Les plats sont découpés à leur niveau supérieur en sorte que l'assemblage est découpé au niveau supérieur (figure 3) à forme biseautée à double étage à section rectangulaire 37 ou de pyramide tronquée avec les deux ailes de l'entretoise, s'engageant dans une découpe complémentaire 38 de la coulisse périphérique 39 de vitre et dans une découpe complémentaire 44 du cadre 45 de porte (représenté partiellement).

La découpe transversale 40 du plat externe 11 s'appuie sur le bord de la coulisse sans jeu, l'extrémité 37 étant maintenue avec étanchéité et retenue sans jeu dans la découpe 38 par des dents anti-retour 43 s'appliquant en pression sur le bord de la coulisse et contre le bord de la découpe 44 de cadre de porte.

De plus, les lèvres 31 et 33 sont appliquées sur les parties de vitre 5 et 7 (selon flèches) respectivement par le contact du plat 11 sur celles-ci à l'assemblage. Une patte rigide 46 (figure 2) formant butée d'inviolabilité antirotation, solidaire de l'aile 15 portant le bord 27 s'applique en outre fermement contre la partie fixe 7.

De même, la partie inférieure 41 (figure 1) du plat externe 11 dans le caisson de porte est découpée en L, sur un côté de la patte transversale 19, formant rail de guidage de la partie mobile de vitre 5 et l'assemblage est engagé dans un logement complémentaire (non représenté) du caisson de porte, y étant fixé par au moins une vis auto foreuse (non représentée) vissée dans le plat interne.

Ainsi fixé, le profilé résiste à une éventuelle torsion contrevenante de celui-ci, d'une part par son engagement en partie supérieure et l'application de la patte rigide 45 contre la partie fixe 7.

## Revendications

1. Profilé notamment pour dormant de vitre de cadre de porte de véhicule, comportant au moins deux plats, externe (11) et interne (13), reliés sensiblement parallèlement l'un à l'autre et en regard l'un de l'autre par une entretoise de liaison (15), lesdits plats définissant en outre avec l'entretoise de liaison au moins deux parties de logement opposées (35), chacune desdites parties de logement étant apte à recevoir une partie de vitre respective (5,7), au moins un desdits plats (11, 13) comportant à une extrémité un bord de découpe (40) apte à être appliqué sans jeu sur le bord d'une coulisse périphérique de vitre (39), **caractérisé en ce qu'**au moins l'un desdits plats (11, 13) est découpé à ladite extrémité avec au moins une partie en saillie (37) apte à être engagée en prise dans une découpe complémentaire (44) du cadre de porte.

2. Profilé selon la revendication 1, **caractérisé en ce que** la partie en saillie (37) est apte à être engagée en prise dans une découpe complémentaire (38) de la coulisse (39).

3. Profilé selon la revendication 1 ou 2, **caractérisé en ce que** la partie en saillie (37) est à forme biseautée ou de pyramide tronquée avec les deux ailes (15) de l'entretoise.

4. Profilé selon la revendication 1 à 3, **caractérisé en ce que** la partie en saillie (37) comporte des moyens d'étanchéité (43) avec la coulisse (39) et/ou le cadre de porte (45).

5. Profilé selon l'une des revendications précédentes, **caractérisé en ce que** la partie en saillie (37) est pourvue d'un système anti-retour (43),
dans lequel le système anti-retour comporte des dents anti-retour (43) aptes à s'appliquer contre le bord supérieur de la découpe (44) du cadre de porte et venir en pression contre la découpe (38).

6. Profilé selon l'une des revendications précédentes, **caractérisé en ce que** le plat interne (13) est flexible et le plat externe (11) est conformé à la forme cintrée du dormant conférant la forme cintrée à l'ensemble des plats (11, 13) reliés par l'entretoise (15).

7. Profilé selon l'une des revendications précédentes, **caractérisé en ce que** les plats (11, 13) sont recouverts d'une peau.

8. Profilé selon l'une des revendications précédentes, **caractérisé en ce que** les parties de logement (35) peuvent comporter des lèvres souples (29, 31, 33), notamment aptes à recevoir avec étanchéité la partie de vitre correspondante (5, 7), des joints en tube, des bourrelets, des parties rigides etc.

9. Profilé selon l'une des revendications précédentes, **caractérisé en ce que** l'entretoise de liaison (15) a une forme élongée s'étendant sur la longueur des plats (11, 13).

10. Profilé selon l'une des revendications précédentes, **caractérisé en ce que** l'entretoise (15) est formée d'une seule pièce avec le plat interne (13) et/ou le plat externe (11).

11. Profilé selon l'une des revendications précédentes, **caractérisé en ce que** le plat externe (11) est apte à être encliqueté dans l'entretoise (15) par une patte transversale (19) du plat externe s'engageant dans un évidement de crochetage complémentaire (17) de l'entretoise,
dans lequel l'évidement de crochetage (17) de l'entretoise comporte un crochet profilé (21) orienté à l'opposé d'un bord latéral (27) disposé de façon à empêcher son désengagement relativement à la patte transversale (19) du plat.

12. Profilé selon la revendication 11, **caractérisé en ce que** l'entretoise (15) est conformée avec au moins deux ailes (15) séparant l'évidement de crochetage (17) au niveau médian ou proche et chacune des parties de logement opposées (35) latéralement, lesdites ailes (15) étant en outre pourvues chacune au moins d'une lèvre (31, 33) recevant une partie de vitre (5, 7) et formant avec les ailes (15) des chicanes (35) d'écoulement de l'eau pour éviter une infiltration d'eau dans l'habitacle du véhicule.

13. Profilé selon l'une des revendications précédentes, **caractérisé en ce que**
l'entretoise (15) est conformée avec au moins une butée (46) appliquée contre la partie de vitre fixe (7), et
le crochet profilé (21) de l'entretoise ou l'entretoise (15) est pourvu d'un élément d'indexage du positionnement d'assemblage du plat externe (11) sur le plat interne (13), par exemple une saillie transversale relativement au crochet profilé (21) et s'engageant dans une rainure complémentaire (23) de la patte transversale (19) du plat externe ou inversement, une saillie de la patte transversale (19) s'engageant dans une rainure complémentaire de l'entretoise (15).

14. Profilé selon l'une des revendications précédentes, **caractérisé en ce que** l'entretoise (15) est conformée avec au moins un moyen de verrouillage du positionnement d'assemblage des plats (11,13), transversalement et longitudinalement.

15. Procédé de montage d'un profilé selon l'une des revendications 1 à 14, **caractérisé en ce qu'**il est monté pré assemblé et cintré sur un cadre d'ouvrant par engagement de la partie en saillie (37) dans la découpe complémentaire (44) de cadre de porte, le bord externe (40) de découpe du plat externe (11) étant en outre appliqué sans jeu sur le bord de la coulisse (39)

## Patentansprüche

1. Profil, insbesondere für eine Fenstereinfassung eines Türrahmens eines Fahrzeugs, das
zumindest zwei Platten enthält, eine äußere (11) und eine innere (13), die im wesentlichen parallel zueinander und im Vergleich miteinander über einen Verbindungsabstandshalter (15) verbunden sind,
wobei diese Platten außerdem mit dem Verbindungsabstandshalter zumindest zwei gegenüberliegende Aufnahmeabschnitte (35) begrenzen,
wobei jeder dieser Aufnahmeabschnitte geeignet ist, einen Abschnitt der jeweiligen Fensterscheibe (5,7) aufzunehmen,
wobei zumindest eine dieser Platten (11, 13) an einem Ende einen Schnittrand (40) aufweist, der geeignet ist, ohne Spiel auf dem Rand einer Randführung der Fensterscheibe (39) aufzuliegen,
**dadurch gekennzeichnet, dass**
die zumindest eine dieser Platten (11, 13) an diesem Ende geschnitten ist mit zumindest einem vorspringenden Abschnitt (37), der geeignet ist, in einen komplementären Ausschnitt (44) des Türrahmens in Eingriff eingeführt zu werden.

2. Profil gemäß Anspruch 1, **dadurch gekennzeichnet, dass** der vorspringende Abschnitt (37) geeignet ist, in einen komplementären Ausschnitt (38) der Führung (39) in Eingriff eingeführt zu werden.

3. Profil gemäß Anspruch 1 oder 2, **dadurch gekennzeichnet, dass** der vorspringende Abschnitt (37) mit den zwei Flügeln (15) des Abstandshalters eine abgeschrägte Form oder die einer abgeschnittenen Pyramide aufweist.

4. Profil gemäß einem der Ansprüche 1 bis 3, **dadurch gekennzeichnet, dass** der vorspringende Abschnitt (37) ein Dichtungsmittel (43) mit der Führung (39) und/oder dem Türrahmen (45) aufweist.

5. Profil gemäß einem der vorigen Ansprüche, **dadurch gekennzeichnet, dass** der vorspringende Abschnitt (37) mit einem Rückzugssperrsystem (43) versehen ist,
wobei das Rückzugssperrsystem Rückzugssperrzähne (43) enthält, die geeignet sind, gegen den oberen Rand des Ausschnitts (44) des Türrahmens anzuliegen und in Druck gegen den Ausschnitt (38) zu gelangen.

6. Profil gemäß einem der vorigen Ansprüche, **dadurch gekennzeichnet, dass** die innere Platte (13) flexibel ist und die äußere Platte (11) angepasst ist an die gebogene Form des Fensterrahmens, was der Gesamtheit der Platten (11, 13), die über den Abstandshalter (15) verbunden sind, die gebogene Form verleiht.

7. Profil gemäß einem der vorigen Ansprüche, **dadurch gekennzeichnet, dass** die Platten (11, 13) mit einer Haut überzogen sind.

8. Profil gemäß einem der vorigen Ansprüche, **dadurch gekennzeichnet, dass** die Aufnahmeabschnitte (35) nachgiebige Lippen (29, 31, 33), die insbesondere geeignet sind, mit Dichtigkeit den entsprechenden Abschnitt der Fensterscheibe (5, 7) aufzunehmen, Hülsenverbindungen, Abdichtungsstreifen, starre Abschnitte usw. enthalten können.

9. Profil gemäß einem der vorigen Ansprüche, **dadurch gekennzeichnet, dass** der Verbindungsabstandshalter (15) eine längliche Form hat, die sich über die Länge der Platten (11, 13) erstreckt.

10. Profil gemäß einem der vorigen Ansprüche, **dadurch gekennzeichnet, dass** der Abstandshalter (15) aus einem einzigen Stück mit der inneren Platte (13) und/oder der äußeren Platte (11) gebildet ist.

11. Profil gemäß einem der vorigen Ansprüche, **dadurch gekennzeichnet, dass** die äußere Platte (11) geeignet ist, in den Abstandshalter (15) eingeklinkt zu werden durch eine Querlasche (19) der äußeren Platte, die in eine komplementäre Einhakausnehmung (17) des Abstandshalters eingreift,
wobei die Einhakausnehmung (17) des Abstandshalters ein Hakenprofil (21) enthält, das einem Seitenrand (27) entgegengesetzt orientiert so angeordnet ist, dass es sein Ausklinken relativ zu der Querlasche (19) der Platte verhindert.

12. Profil gemäß Anspruch 11, **dadurch gekennzeichnet, dass**
der Abstandshalter (15) mit zumindest zwei Flügeln (15) versehen ist, die die Einhakausnehmung (17) auf mittlerer Höhe oder nahe jedem der gegenüberliegenden Aufnahmeabschnitte (35) seitlich trennen,
wobei jeder dieser Flügel (15) außerdem mit zumindest einer Lippe (31, 33) versehen ist, die einen Abschnitt der Fensterschiebe (5, 7) aufnimmt und mit den Flügeln (15) Ablenkelemente (35) für das Strömen von Wasser bildet zum Vermeiden eines Eindringens von Wasser in die Kabine des Fahrzeugs.

13. Profil gemäß einem der vorigen Ansprüche, **dadurch gekennzeichnet, dass** der Abstandshalter (15) mit zumindest einem Anschlag (46) versehen ist, der gegen den Abschnitt der festen Fensterscheibe (7) anliegt, und
das Hakenprofil (21) des Abstandshalters oder der Abstandshalter (15) mit einem Element zum Indizieren des Positionierens des Zusammenfügens der äußeren Platte (11) mit der inneren Platte (13) versehen ist, beispielsweise einem seitlichen Vorsprung relativ zu dem Hakenprofil (21), der in eine komplementäre Rille (23) der Querlasche (19) der äußeren Platte eingreift, oder umgekehrt einem Vorsprung der Querlasche (19), der in eine komplementäre Rille des Abstandhalters (15) eingreift.

14. Profil gemäß einem der vorigen Ansprüche, **dadurch gekennzeichnet, dass** der Abstandshalter (15) transversal und longitudinal mit zumindest einem Verriegelungsmittel für das Positionieren des Zusammenfügens der Platten (11, 13) versehen ist.

15. Verfahren zum Montieren eines Profils gemäß einem der Ansprüche 1 bis 14,
**dadurch gekennzeichnet, dass**
es vormontiert und gebogen auf einen Rahmen einer Öffnung montiert wird durch Eingreifen des hervorspringenden Abschnitts (37) in den komplementären Ausschnitt (44) des Türrahmens,
wobei der Außenschnittrand (40) der äußeren Platte (11) außerdem ohne Spiel auf dem Rand der Führung (39) aufliegt.

## Claims

1. A profile, in particular for a window frame of a door frame of a vehicle, comprising at least two flats, an external flat (11) and an internal flat (13), connected substantially parallel to one another and opposite one another by a connecting spacer (15), said flats additionally defining with the connecting spacer at least two opposed housing parts (35), each of said housing parts being able to receive a respective window part (5, 7), at least one of said flats (11, 13) comprising at one end a cut edge (40) able to be applied without play on the edge of a peripheral window channel (39), **characterized in that** at least one of said flats (11, 13) is cut at said end with at least one projecting part (37) able to be engaged in a complementary cutout (44) of the door frame.

2. The profile according to Claim 1, **characterized in that** the projecting part (37) is able to be engaged in a complementary cutout (38) of the channel (39).

3. The profile according to Claim 1 or 2, **characterized in that** the projecting part (37) has a bevelled or truncated pyramid shape with the two wings (15) of the spacer.

4. The profile according to Claims 1 to 3, **characterized in that** the projecting part (37) comprises means (43) for sealing with the channel (39) and/or the door frame (45).

5. The profile according to one of the preceding claims, **characterized in that** the projecting part (37) is provided with a non-return system (43), wherein the non-return system comprises non-return teeth (43) able to be applied against the upper edge of the cutout (44) of the door frame and to press against the cutout (38).

6. The profile according to one of the preceding claims, **characterized in that** the internal flat (13) is flexible and the external flat (11) is matched to the curved shape of the window frame, imparting the curved shape to all the flats (11, 13) connected by the spacer (15).

7. The profile according to one of the preceding claims, **characterized in that** the flats (11, 13) are covered with a skin.

8. The profile according to one of the preceding claims, **characterized in that** the housing parts (35) can comprise flexible lips (29, 31, 33) in particular able to receive with sealing the corresponding window part (5, 7), tube seals, beads, rigid parts, etc.

9. The profile according to one of the preceding claims, **characterized in that** the connecting spacer (15) has an elongate shape extending over the length of the flats (11, 13).

10. The profile according to one of the preceding claims, **characterized in that** the spacer (15) is formed in one piece with the internal flat (13) and/or the external flat (11).

11. The profile according to one of the preceding claims, **characterized in that** the external flat (11) is able to be snap-fastened into the spacer (15) by a transverse tab (19) of the external flat engaging in a complementary latching recess (17) of the spacer, wherein the latching recess (17) of the spacer comprises a profiled hook (21) oriented oppositely to a lateral edge (27) arranged so as to prevent its disengagement relative to the transverse tab (19) of the flat.

12. The profile according to Claim 11, **characterized in that** the spacer (15) is configured with at least two wings (15) separating the latching recess (17) at the median level or nearby and each of the laterally opposed housing parts (35), said wings (15) being additionally each provided at least with a lip (31, 33) receiving a window part (5, 7) and forming with the wings (15) water flow chicanes (35) to prevent water from infiltrating into the passenger compartment of the vehicle.

13. The profile according to one of the preceding claims, **characterized in that** the spacer (15) is configured with at least one stop (46) applied against the fixed window part (7), and the profiled hook (21) of the spacer or the spacer (15) is provided with an element for indexing the assembly positioning of the external flat (11) on the internal flat (13), for example a transverse projection relative to the profiled hook (21) and engaging in a complementary groove (23) of the transverse tab (19) of the external flat or vice versa, a projection of the transverse tab (19) engaging in a complementary groove of the spacer (15).

14. The profile according to one of the preceding claims, **characterized in that** the spacer (15) is configured with at least one means for locking the assembly positioning of the flats (11, 13), transversely and longitudinally.

15. A method for mounting a profile according to one of Claims 1 to 14, **characterized in that** it is mounted pre-assembled and in a curved manner on an opening leaf frame by engagement of the projecting part (37) in the complementary cutout (44) of the door frame, the external cut edge (40) of the external flat (11) additionally being applied without play on the edge of the channel (39).
